# EUROPEAN PATENT SPECIFICATION

(11) **EP 0 611 682 B1**
(45) Date of publication and mention of the grant of the patent: **11.12.1996**
(21) Application number: 94301044.7
(22) Date of filing: 14.02.1994
(51) Int. Cl.: B60R 19/24

(54) **Vehicle bumper assembly**
Stossfänger für Kraftfahrzeug
Pare-chocs pour véhicules

(30) Priority: 15.02.1993 GB 9302989
(43) Date of publication of application: 24.08.1994
(73) Proprietor: NISSAN EUROPEAN TECHNOLOGY CENTRE LIMITED, Tyne & Wear SR5 3NS (GB)
(72) Inventor: Beveridge, Robert Justin, Wellingborough, Northants NN9 6AR (GB)
(74) Representative: Godwin, Edgar James

(56) References cited:
- US-A- 3 427 063
- US-A- 5 066 057

## Description

This invention relates to a bumper assembly for a vehicle as specified in the preamble of claim 1 and as disclosed, for example, in the document US-A-5 006 057.

A bumper assembly is well-known in which an outer plastic fascia is fixed on an inner transverse reinforcement made of pressed steel sheet. The reinforcement extends transversely over substantially the whole of the width of the front or rear end of the vehicle body and its primary purpose is to withstand impacts. The fascia closely covers the reinforcement and its primary purpose is that of styling. In particular, it may be moulded so as to match the shape of the adjacent body panels, it may also be coloured to match the colour of the bodywork, and it may have end-portions which extend laterally beyond the reinforcement and which constitute wrap-arounds extending alongside the vehicle.

There is an increasing demand for bumper assemblies of greater vertical extent, particularly on a vehicle having a higher body than conventional saloon cars, such as a multi-purpose leisure vehicle designed for on-road and off-road use. However, an increase in the height of the above-described bumper assembly brings a number of disadvantages. The reinforcement makes up a large proportion of the weight of the assembly. Therefore, as its size is increased it becomes excessively heavy, and the weight of the bumper assembly becomes significant relative to the weight of the vehicle body. Furthermore, the assembly becomes more expensive in terms of material costs and manufacturing costs. In particular, material has to be added to the reinforcement in order to stiffen it. The bumper assembly provides an obstruction restricting the space available for other equipment and, at the front, it prevents efficient cooling of the engine.

What is desired is a bumper assembly which overcomes or at least mitigates these problems. In particular, it would be desirable to be able to provide a bumper assembly which is relatively inexpensive, relatively lightweight and relative unobstructive.

The present invention provides a bumper assembly comprising an inner transverse reinforcement which is to be mounted on one end of a vehicle body, and an outer fascia fixed to and covering the outside of the reinforcement, wherein the reinforcement occupies only part of the height of the fascia so that the fascia has an upward extension beyond the reinforcement, the assembly including a supporting structure comprising an elongate transverse member, arranged above the reinforcement and inside the upward extension of the fascia, and transversely spaced legs mounting the transverse member on the reinforcement, and means for connecting the upward extension of the fascia to the supporting structure.

Accordingly, the space behind the upward extension is relatively unobstructed, which allows more freedom in packaging other components of the vehicle and in the design of the corresponding part of the vehicle body and, in the case of a front bumper assembly, facilitates passage of cooling air through the assembly. The upward extension of the fascia is supported by the supporting structure, which is relatively light and which resists vibrational movement of the fascia. The transverse member can provide sufficient support to the fascia, for example to allow a person to stand on an upper portion of the fascia.

The transverse member preferably extends over most of the transverse width of the reinforcement. It preferably has a leg at (or near) each end; preferably each of these legs is an integral extension of the member. One or more additional legs may be provided. It is preferable for the legs to be symmetrically arranged with respect to the middle of the bumper assembly.

Further preferred and optional features of the invention are set forth in the claims.

The invention will be described further, by way of example, with reference to the accompanying drawings, in which:
Figure 1 is a partly cut-away exploded perspective view of a front bumper assembly including a fascia and a transverse reinforcement;
Figure 2 is an enlarged section on line II-II in Figure 1;
Figure 3 is an enlargement of the detail III in Figure 1, showing a first type of latch-receiving formation inside the bumper fascia;
Figure 4 is an enlargement of the detail IV in Figure 1, showing a first type of clip with a latching tongue;
Figure 5 is a diagrammatic perspective view showing the latch-receiving formation approaching the latching tongue;
Figure 6 is an enlarged section on line VI-VI in Figure 1;
Figure 7 is an enlargement of the detail XII in Figure 1, showing a second type of latch receiving formation;
Figure 8 is an enlargement of the detail XIII in Figure 1, showing a second type of clip with a latching tongue;
Figure 9 is an enlarged section on line IX-IX in Figure 1;
Figure 10 is an enlarged section on line X-X respectively, in Figure 1, showing a snap-fitting connection between the bumper fascia and the bumper reinforcement;
Figure 11 is a fragmentary schematic vertical transverse section through the front part of a vehicle, showing the relationship between an end portion of the fascia, a chassis frame, a vehicle body, and a mount;
Figure 12 is a fragmentary horizontal transverse section through the fascia, the mount, and the body, taken on line XII-XII in Figures 1, 13, and 14;
Figure 13 is a section taken on line XIII-XIII in Figures 12 and 14;
Figure 14 is a section taken on line XIV-XIV in Figures 1 and 12;
Figures 15 to 18 are enlarged sections on lines XV-XV to XVIII-XVIII, respectively, showing fixing connections between the bumper fascia and the bumper reinforcement;
Figure 19 is similar to Figure 9, but with a modified bumper fascia and a spacer;
Figure 20 is perspective view of the spacer in Figure 19; and
Figure 21 is a view similar to Figure 6, but relating to the modified bumper fascia with a spacer.

In the drawings, the double-headed arrow X represents the transverse direction of a vehicle, Y the fore-and-aft direction, and Z the vertical direction.

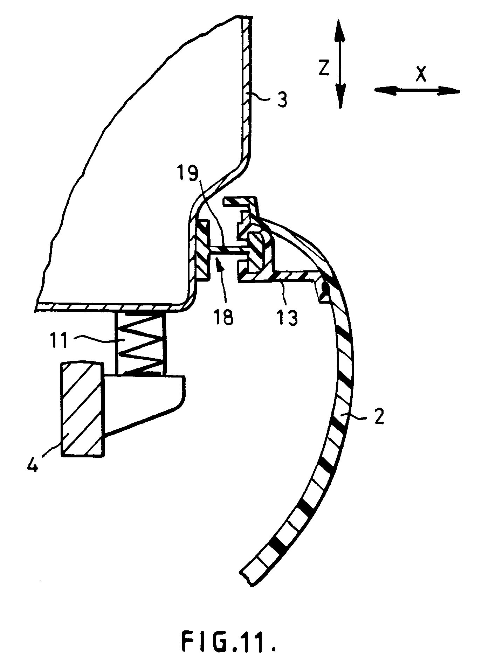

The bumper assembly illustrated in the drawings is shown, by way of example, as applied to a multi-purpose leisure vehicle whose body comprises a chassis frame 4 (Figure 11) which carries bodywork 3 by way of suspension members 11 (only one of which is shown) which allow limited vertical movement of the bodywork 3. The bumper fascia 1 is made of polypropylene or another suitable plastics material and is produced by injection moulding. At each end it has a wrap-around portion 2 which extends rearwardly alongside the bodywork.

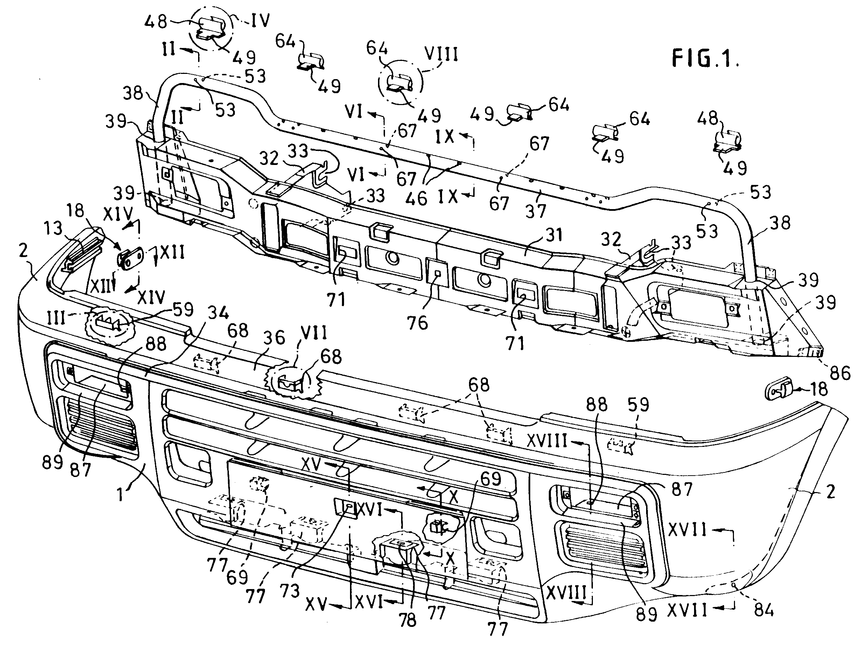

Referring to Figure 1 in particular, it will be seen that the bumper assembly includes a transverse reinforcement 31 to which the fascia 1 is fixed. The reinforcment 31 is of generally C-shaped cross-section and is fabricated from steel sheet by pressing and welding. It has two rearwardly-extending arms 32 for fixing to the chassis frame 4 by means of bolts (not shown) passing through apertures 33. The reinforcement 31 is covered by the fascia 1 and extends across the entire width of the front end of the vehicle body 3, but it occupies only the lower half of the height of the fascia 1. The vertical position of the reinforcement is comparable to the vertical position of the bumpers of other passenger vehicles and is in accordance with the appropriate standard (ISO 2958-1973(E)), its mid-height being at 445 mm above the ground.

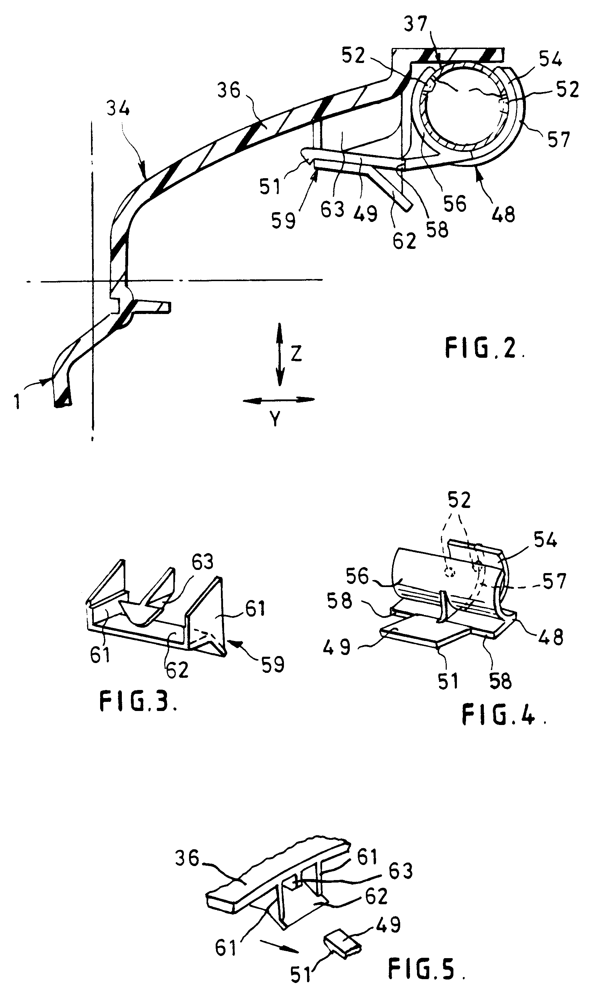

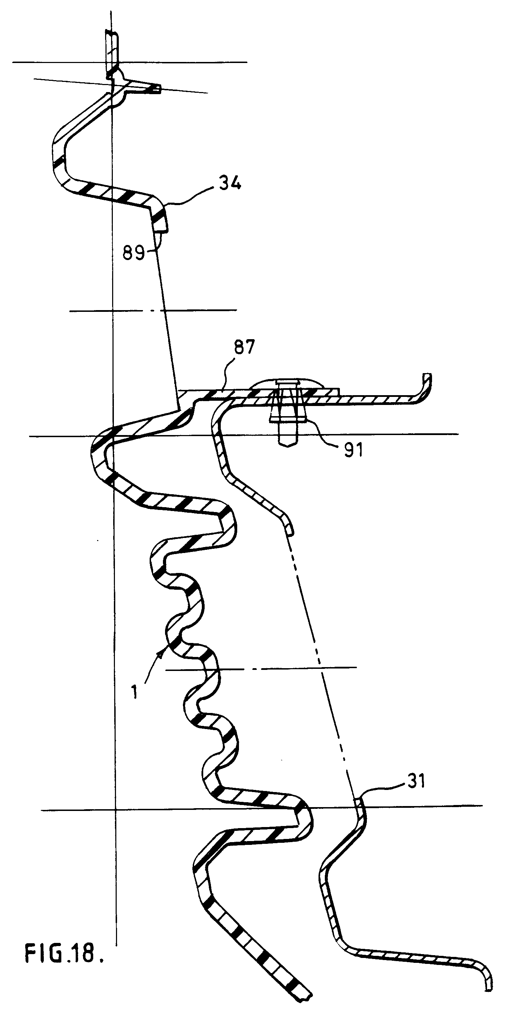

Accordingly, the fascia 1 has an upward extension 34 beyond the reinforcement 31 including an upper portion 36 remote from the reinforcement so that, as can be seen in Figures 2, 6, 9, 10, 15, and 18, a free space is left behind the fascia above the reinforcement. This space is traversed by an elongate transverse member, preferably of cylindrical shape as shown, constituted by a bent steel tube 37 whose ends form integral legs 38 which are inserted downwardly into holes 39 in the reinforcement 31 and welded there. The tube 37 functions to some extent as a torsion bar between the end portions of the reinforcement 31, thereby enhancing the stiffness of the reinforcement. One or more additional legs (not shown) may be welded between the tube 37 and the reinforcement 31 if desired, for additional rigidity.

The upper fascia portion 36 rests directly on the outer end portions of the transverse tube 37, as shown in Figure 2. Each outer end portion carries a plastic clip 48 of C-shaped cross-section, with a forwardly-projecting integral tongue 49 which has a latching lip 51 at its tip. The clip 48 is upwardly open, which provides definite advantages: it leaves the upper surface of the tube 37 exposed to support the upper fascia portion 36 directly, thereby preventing distortion of the fascia by parts protruding upwards beyond the tube 37, which could occur under an extreme heat condition if the resting surface was not flat; and the clip is retained securely against removal in the fore-and-aft directions (Y). The correct location of the clip 48 on the tube 37 is determined by integral pegs 52 which engage in holes 53 spaced 150° apart on the tube. The rear portion 54 of the clip is narrower than the front portion 56, and its flexibility is controlled by an integral stiffening rib 57. The tongue 49 is narrower than the front portion 56 and defines a pair of steps 58.

The tongue 49 fits in a corresponding rearwardly-open latch-receiving formation 59 inside the upper portion 36 of the fascia 1. The formation has two sidewalls 61 whose mutual spacing is greater than the width of the tongue 49 but less than the width of the front portion 56 of the clip 48. The wide spacing facilitates fitting of the formation 59 on the tongue 49 and allows transverse movement of the tongue 49 relative to the formation 59 due to differential thermal expansion of the fascia 1 and the tube 37. When the fascia 1 is offered up to the reinforcement 31, the tongue 49 rides up the floor 62 of the formation 59 and the lip 51 is forced through a gap between the floor 62 and a depending rib 63, the floor 62 yielding to allow this. The combined features of this sloped floor and the comparatively wide spacing between the two sidewalls 61 and the tongue 49 facilitate fitting of the upper fascia portion to the transverse tube. The lip 51 latches against the front edge of the floor 62, preventing forward motion of the fascia, and the rear edges of the sidewalls 61 abut against the steps 58, preventing rearward motion of the fascia.

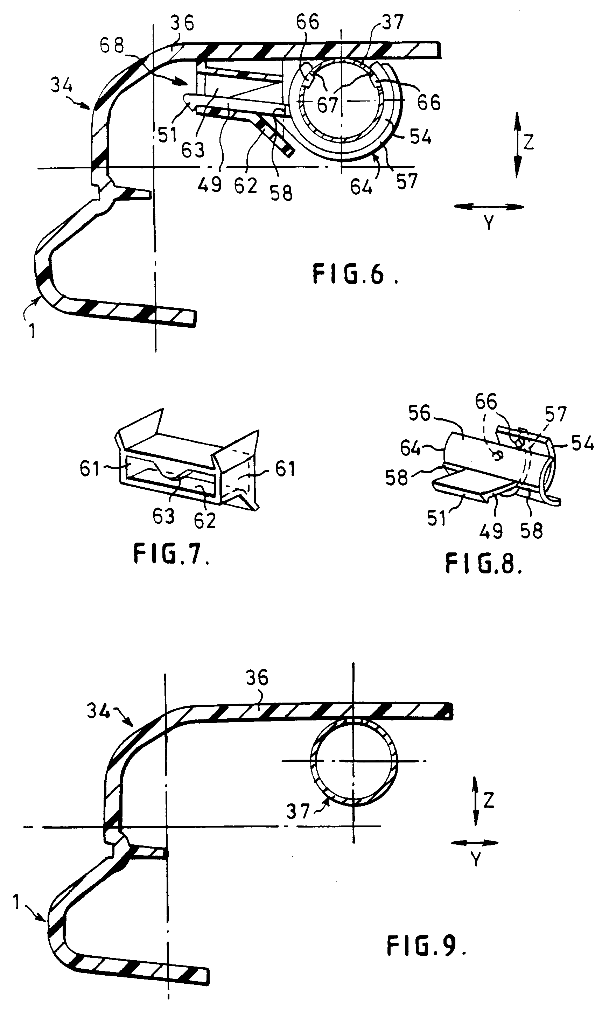

The central portion of the tube 37 carries four plastic clips 64 (Figure 6), each of upwardly-open C-shaped cross-section with a tongue 49 having a latching lip 51. The correct location of the clip 64 is determined by integral pegs 66 which engage in holes 67 spaced 120° apart on the tube 37 (thereby being easily distinguished from the holes 53). The clip 64 (like the clip 48) has front and (narrower) rear portions 56,54, a stiffening rib 57, and abutment steps 58. The tongue 49 of each clip 64 fits in a corresponding latch-receiving formation 68 which (like the formation 59) has sidewalls 61, a floor 62, and a depending rib 63 which cooperate with the tongue 49 in the manner described above.

At the location of each clip 48,64 (see Figures 2 and 6) and in the regions between the clips (see Figure 9) the upper fascia portion 36 rests directly on the tube 37. Thus the upper fascia portion 36 is supported by the tube 37 against downward deflection, along substantially the whole of the transverse extent of the tube 37 between its legs 38.

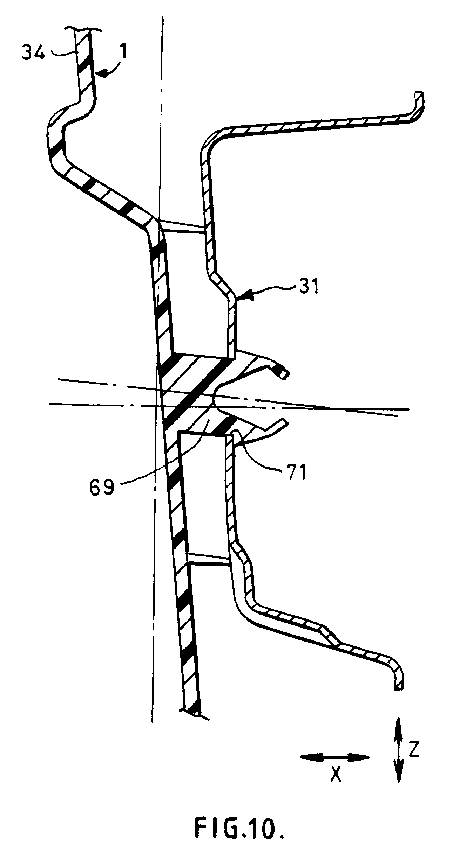

The lower part of the fascia 1 has two internal barbed projections 69 (Figure 10) which are a snap fit in wider rectangular apertures 71 (allowing for differential thermal expansion) in the reinforcement 31.

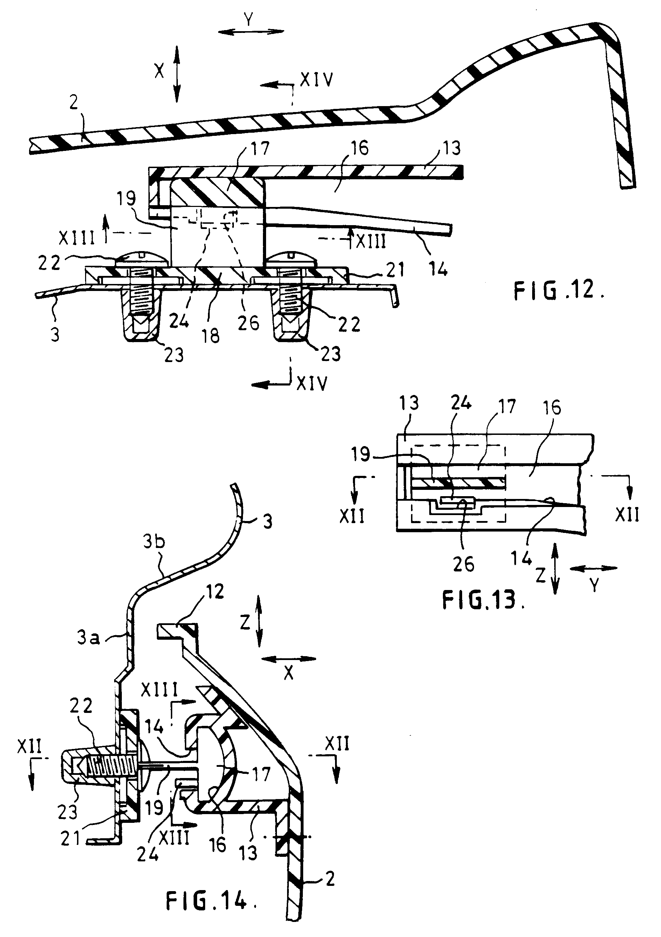

The upper edge of each wrap-around end portion 2 of the fascia 1 has a flange 12 (Figure 14) which is spaced (e.g. by 6 ± 2 mm) from a vertical section 3a and (e.g. by 11 ± 2 mm) from an obliquely overhanging section 3b of the bodywork 3. A plastics bracket 13 (e.g. polypropylene) is welded or bonded to the internal surface of the end portion 2. The bracket 13 defines an undercut slot 14 communicating with an elongate cavity 16 for accommodating, as a friction fit, a head 17 which is an integral part of a one-piece mounting member 18. The slot 14 and cavity 16 are widened in the rearward direction and are open at the rear.

The head 17 is linked by a horizontal planar element 19 to an integral base 21 which is fixed on the outside of the body 3 by means of screws 22 which extend through holes in the body and engage in retaining elements 23. The mounting member is made of a resilient plastics material, such as a thermoplastic elastomer (polyester) sold under the trademark "Hytrel" (DuPont), and is produced by injection moulding. The thin linking element 19 is resiliently flexible; it can be bent out of its own plane and also forms an integral hinge connection between each of its opposite edge portions and the head 17 and the base 21 respectively. This allows limited relative movement of the wrap-around portion 2 and the body 3 in the vertical direction Z. However, in its own horizontal plane the linking element 19 is relatively rigid in compression, tension, and shear, so that it resists relative movement of the wrap-around portion 2 and the body 3 in the transverse and fore-and-aft directions (X,Y).

In fitting the fascia 1 to the vehicle, the fascia is offered up from the front so that the head 17 of the mounting member 18 (which has previously been attached to the body 3 by the screws 22) enters the open end of the longitudinal cavity 16, and the fascia is then pushed rearwards so that the head 17 jams in the cavity 16. The widened rear end of the cavity ensures that the bracket 13 can easily engage into the mounting member 18 during assembly of the vehicle without the assembly operator actually having sight of the mounting member 18. In order to assist retention, the head 17 has an integral resiliently flexible projection or lug 24 which rides over the lower edge of the slot 14 and latches in a recess 26 provided in the lower edge of the slot 14. The wrap-around portions 2 may therefore be easily and positively secured into position using a blind snap-fit operation.

Thus the fascia 1 can easily be fitted blind, by offering it up to the front of the vehicle (already fitted with the reinforcement 31) so that the brackets 13 engage with the mounting members 18, the latch-receiving formations 59,68 engage with the latching tongues 49, and the projections 69 engage with the apertures 71.

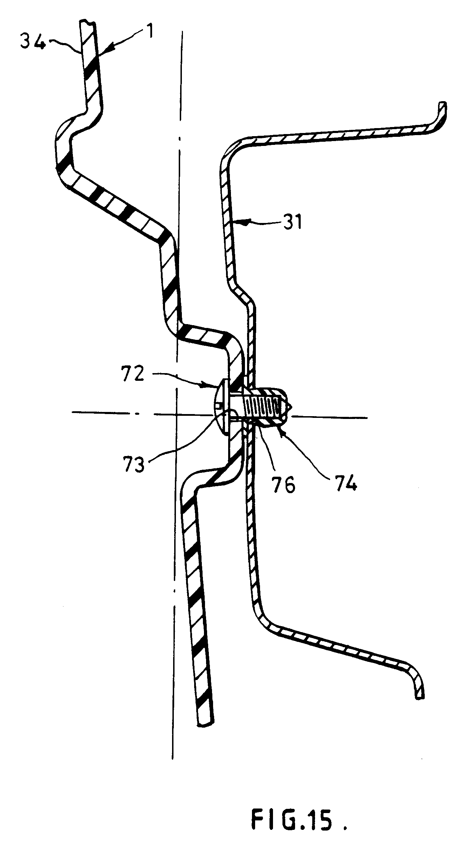

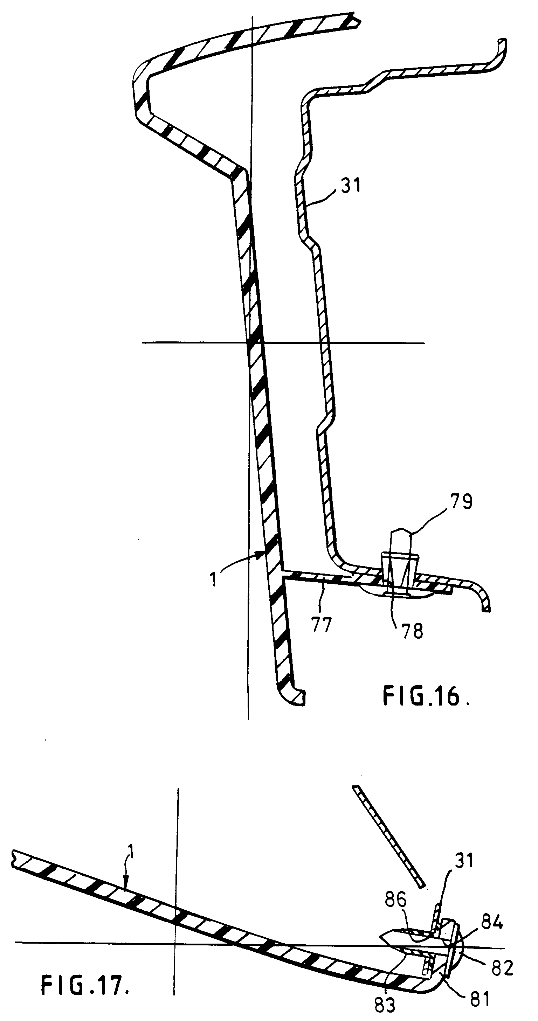

The fascia 1 can then be fixed from the outside, as will now be described with reference to Figures 15 to 18. At the centre, a screw 72 passes through a hole 73 in the fascia and engages a grommet 74 in a central hole 76 in the reinforcement 31. Integral flanges 77 with slots 78 (allowing for differential expansion), on the fascia, are accessible from the underside and attached to the reinforcement 31 by clips 79. Each corner of the fascia 1 has an integral flange 81 which is fixed to the rear part of the end of the reinforcement 31 by a screw 82 and a grommet 83 engaging in holes 84,86. Integral flanges 87 with slots 88, on the fascia, are accessible through front apertures 89 and attached to the reinforcement by clips 91.

The bumper assembly described above provides a number of advantages. It is relatively lightweight, particularly having regard to the limitation of the height of the reinforcement in relation to the height of the fascia, and the use of a supporting structure of low weight. A support structure in the form of a bent tube not only minimises the weight but also facilitates manufacture of the support structure. The bumper assembly is of relatively low cost both from the point of view of material requirements and assembly proceedures. The support structure leaves plenty of free space above the reinforcement and does not obstruct the flow of cooling air. Assembly of the fascia to the reinforcement and supporting structure is particularly easy.

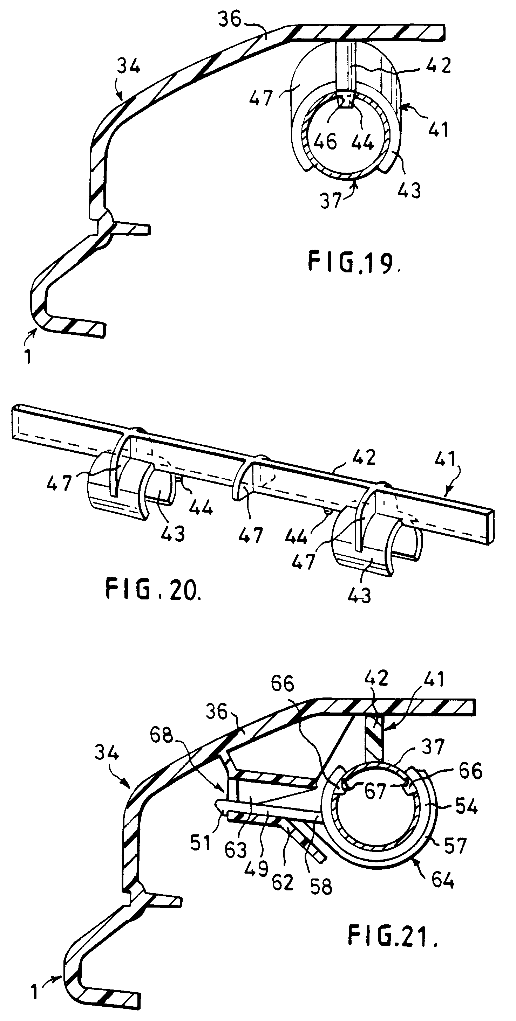

Various modifications may be made within the scope of the invention. For instance, as shown in Figures 19 and 21, the fascia 1 may be modified so that the central region of the upper fascia portion 36 is raised and rests on plastic spacers 41 (are shown in Figure 20) which are clipped onto the tube 37. This arrangement enables differentiation of the fascia design as sometimes required for a different model type without substantially changing the supporting structure under the fascia. Each spacer 41 comprises a bar 42 which extends along the tube 37 and which has a pair of integral C-shaped clips 43 for engaging the tube. The correct location of the spacers 41 on the tube 37 is determined by integral pegs 44 which engage in pre-drilled holes 46 in the tube. Integral fins 47 on the bar 42 provide additional support for the upper fascia portion 36. The spacers 41 are arranged end-to-end and the number of spacers 41 (e.g. 3 spacers) is sufficient to occupy substantially the whole of the raised central region of the upper fascia portion 36, which is therefore fully supported against sagging.

Other modifications may be made within the scope of the invention. For example, the tube 37 could be replaced by a transverse member of another cross-sectional shape or another material (metal or plastics). The latching tongues may be fixed directly on the transverse member, e.g. by welding. At least one of the latching tongue/latch-receiving formation pairs may be reversed; i.e. a latching tongue is provided on the fascia and a latch-receiving formation (e.g. a slot) is provided on the tube 37. One or more cooperating pairs of connectors may be provided between the fascia and one or more of the legs. The transverse member may be sub-divided into two or more parts, each supported by a pair of legs, for example. The legs 38 may be separate from the tube 37 and may be fixed to the tube at its ends or at positions spaced from its ends.

The above description is directed to a front bumper assembly. A rear bumper assembly can obviously be provided in a similar manner. The bumper assembly may be fitted to a monocoque body structure instead of to a chassis frame.

Attention is directed to co-pending European patent application No. 93310520.7 filed 23rd December 1993, entitled "Vehicle bumper mounting", which describes and claims a mounting as shown in Figures 11 to 14.

## Claims

1. A bumper assembly comprising an inner transverse reinforcement (31) which is to be mounted on one end of a vehicle body, and an outer fascia (1) fixed to and covering the outside of the reinforcement (31), characterised in that the reinforcement (31) occupies only part of the height of the fascia (1) so that the fascia (1) has an upward extension (34) beyond the reinforcement (31), the assembly including a supporting structure (37,38) comprising an elongate transverse member (37), arranged above the reinforcement (31) and inside the upward extension (34) of the fascia (1), and transversely spaced legs (38) mounting the transverse member (37) on the reinforcement (31), and connecting means (48,59; 64,68) for connecting the upward extension (34) of the fascia (1) to the supporting structure (37,38).

2. A bumper assembly as claimed in claim 1, in which the reinforcement (31) has a generally C-shaped cross-section.

3. A bumper assembly as claimed in claim 1 or 2, in which the reinforcement (31) is made of sheet metal, preferably steel.

4. A bumper assembly as claimed in any of claims 1 to 3, in which the transverse member (37) is of substantially constant cross-section.

5. A bumper assembly as claimed in any of claims 1 to 4, in which the transverse member (37) is of circular cross-section.

6. A bumper assembly as claimed in any of claims 1 to 5, in which the transverse member (37) is hollow.

7. A bumper assembly as claimed in any of claims 1 to 6, in which the transverse member (37) is made of metal, preferably steel.

8. A bumper assembly as claimed in any of claims 1 to 7, in which the transverse member (37) extends over most of the transverse width of the reinforcement (31).

9. A bumper assembly as claimed in any of claims 1 to 8, in which the transverse member (37) supports the upper portion (36) of the fascia (1) so as to resist downward movement of the said upper portion (36) over the whole of their co-extensive transverse extents.

10. A bumper assembly as claimed in any of claims 1 to 9, in which an upper portion (36) of the fascia (1) is in direct contact with the transverse member (37) over at least part of its transverse width.

11. A bumper assembly as claimed in any of claims 1 to 10, in which the said connecting means comprises at least one cooperating pair of connectors consisting of a latching tongue (49) and a latch-receiving formation (59;68).

12. A bumper assembly as claimed in claim 11, in which the latch-receiving formation (59;68) is on the fascia and the latching tongue (49) is on the supporting structure (37,38).

13. A bumper assembly as claimed in claim 12, in which the latching tongue (49) is provided on a clip (48;64) which engages the supporting structure (37,38).

14. A bumper assembly as claimed in claim 13, in which the clip (48;64) engages around the transverse member (37).

15. A bumper assembly as claimed in claim 14, in which the clip (48;64) is upwardly open.

16. A bumper assembly as claimed in claim 14 or 15, in which the clip (48;64) and the transverse member (37) have at least one cooperating locating peg and hole pair (52,53; 66,67).

17. A bumper assembly as claimed in claim 16, in which there are two peg and hole pairs (52,53; 66,67) angularly spaced around the transverse member (37).

18. A bumper assembly as claimed in any of claims 11 to 17, in which the latch-receiving formation (59;68) has a receiving aperture which is wider than the tongue in the transverse direction.

19. A bumper assembly as claimed in any of claims 11 to 18, in which the tongue (49) is provided with steps (58) for abutting against the latch-receiving formation (59).

20. A bumper assembly as claimed in any of claims 1 to 19, in which the fascia (1) has end portions (2) which are to extend alongside the vehicle body, and mounting means (18) for mounting each said end portion (2) on the body, and in which each mounting means (18) includes at least one linking element (19) which extends in a fore-and-aft direction and a transverse direction, the linking element (19) having first and second opposite edge portions which are connectable to the body and the said end portion (2) of the fascia (1) respectively, for enabling the mounting means (18) to permit limited relative movement of the body and the said end portion (2) in a vertical direction (Z) but resisting relative movement in the fore-and-aft and transverse directions (X,Y).

21. A bumper assembly as claimed in any of claims 1 to 20, in which the fascia (1) and the reinforcement (31) have at least one cooperating snap-fitting projection and aperture pair (69,71).

22. A bumper assembly as claimed in any of claims 1 to 21, in which, in addition to the connecting means, (48,59; 64,68) the fascia (1) is connected to the reinforcement (31) by fixing means (72,79,82,91) which are accessible from outside the fascia (1).

23. A bumper assembly as claimed in any of claims 1 to 22, in which the fascia (1) is made of plastics material, e.g. polypropylene.

24. A bumper assembly as claimed in any of claims 1 to 23, in which the legs (38) are symmetrically arranged with respect to the middle of the bumper assembly.

25. A bumper assembly as claimed in any of claims 1 to 24, in which the legs (38) are at each end of the transverse member (37).

26. A bumper assembly as claimed in claim 25, in which the said legs (38) constitute an integral extension of the transverse member (37).

27. A bumper assembly as claimed in claim 25 or 26, including at least one additional leg between the said legs (38).

28. A bumper assembly as claimed in any of claims 1 to 27, including at least one spacer (41) interposed between the transverse member (37) and an upper portion (36) of the fascia (1).

29. A bumper assembly as claimed in claim 28, in which the spacer (41) comprises a bar (42) extending along the elongate transverse member (37) and securing means (43) for securing the bar (42) to the transverse member (37).

30. A bumper assembly as claimed in claim 29, in which the securing means comprises at least one clip (43) which is attached to the bar (42) and engages around the transverse member (37).

31. A bumper assembly as claimed in any of claims 28 to 30, in which the spacer (41) and the transverse member (37) have a cooperating locating peg and hole pair (44,46).

## Patentansprüche

1. Stoßstangen-Baugruppe, die eine innere Querversteifung (31), die an einem Ende einer Karosserie anzubringen ist, und eine äußere Frontplatte (1) umfaßt, die an der Außenseite der Versteifung (31) angebracht ist und diese bedeckt, dadurch gekennzeichnet, daß die Versteifung (31) nur einen Teil der Höhe der Frontplatte (1) bedeckt, so daß die Frontplatte (1) eine nach oben über die Versteifung (31) reichende Erweiterung (34) hat, wobei die Baugruppe folgende Komponenten einschließt: eine Stützkonstruktion (37, 38), die ein längliches Querelement (37), das oberhalb der Versteifung und innerhalb der nach oben reichenden Erweiterung (34) der Frontplatte (1) angeordnet ist, und quer verlaufende, im Abstand zueinander angeordnete Schenkel (38), mit denen das Querelement (37) an der Verstärkung (31) befestigt wird, einschließt und Verbindungsmittel (48, 59; 64, 68) zur Verbindung der nach oben reichenden Erweiterung (34) der Frontplatte (31) mit der Stützkonstruktion (37, 38).

2. Stoßstangen-Baugruppe nach Anspruch 1, bei der die Versteifung (31) einen im allgemeinen C-förmigen Querschnitt hat.

3. Stoßstangen-Baugruppe nach einem der Ansprüche 1 oder 2, bei der die Versteifung (31) aus Metallblech, vorzugsweise aus Stahlblech, hergestellt wird.

4. Stoßstangen-Baugruppe nach einem der Ansprüche 1 bis 3, bei der das Querelement (37) einen im wesentlichen konstanten Querschnitt hat.

5. Stoßstangen-Baugruppe nach einem der Ansprüche 1 bis 4, bei der das Querelement (37) einen runden Querschnitt hat.

6. Stoßstangen-Baugruppe nach einem der Ansprüche 1 bis 5, bei der das Querelement (37) hohl ist.

7. Stoßstangen-Baugruppe nach einem der Ansprüche 1 bis 6, bei der das Querelement (37) aus Metall, vorzugsweise aus Stahl, hergestellt wird.

8. Stoßstangen-Baugruppe nach einem der Ansprüche 1 bis 7, bei der sich das Querelement (37) über den größten Teil der querverlaufenden Ausdehnung der Versteifung (31) erstreckt.

9. Stoßstangen-Baugruppe nach einem der Ansprüche 1 bis 8, bei der das Querelement (37) den oberen Abschnitt (36) der Frontplatte (1) trägt, so daß der Bewegung des genannten oberen Abschnitts (36) nach unten über der gesamten gemeinsamen Ausdehnung in Querrichtung entgegengewirkt wird.

10. Stoßstangen-Baugruppe nach einem der Ansprüche 1 bis 9, bei der sich ein oberer Abschnitt (36) der Frontplatte (1) über wenigstens einem Teil der Querausdehnung im direkten Kontakt mit dem Querelement (37) befindet.

11. Stoßstangen-Baugruppe nach einem der Ansprüche 1 bis 10, bei der das Verbindungsmittel wenigstens ein zusammenwirkendes Paar von Steckverbindungen aufweist, die aus einer einschnappenden Zunge (49) und einer die einschnappende Zunge aufnehmenden Formation (59; 68) besteht.

12. Stoßstangen-Baugruppe nach Anspruch 11, bei der sich die die einschnappende Zunge aufnehmende Formation (59; 68) auf der Frontplatte befindet und die einschnappende Zunge (49) auf der Stützkonstruktion (37, 38) angeordnet ist.

13. Stoßstangen-Baugruppe nach Anspruch 12, bei der die einschnappende Zunge (49) auf einer Klemme (48; 64) vorhanden ist, die mit der Stützkonstruktion (37, 38) ineinandergreift.

14. Stoßstangen-Baugruppe nach Anspruch 13, bei der die Klemme (48; 64) um das Querelement (37) zum Eingriff kommt.

15. Stoßstangen-Baugruppe nach Anspruch 14, bei der die Klemme (48; 64) nach oben offen ist.

16. Stoßstangen-Baugruppe nach Anspruch 14 oder 15, bei der die Klemme (48; 64) und das Querelement (37) wenigstens ein zusammenwirkendes Paar aus Fixierstift und -loch (52, 53; 66, 67) haben.

17. Stoßstangen-Baugruppe nach Anspruch 16, bei der zwei Paare aus Stift und Loch (52, 53; 66, 67) vorhanden sind, die im Winkelabstand um das Querelement (37) angeordnet sind.

18. Stoßstangen-Baugruppe nach einem der Ansprüche 11 bis 17, bei der die die einschnappende Zunge aufnehmende Formation (59; 68) eine Aufnahmeöffnung hat, die in der Querrichtung breiter als die Zunge ist.

19. Stoßstangen-Baugruppe nach einem der Ansprüche 11 bis 18, bei der die Zunge (49) mit Absätzen (58) zum Anstoßen an die die einschnappende Zunge aufnehmende Formation (59) versehen ist.

20. Stoßstangen-Baugruppe nach einem der Ansprüche 1 bis 19, bei der die Frontplatte (1) Endabschnitte (2), die längs der Karosserie verlaufen sollen, und Befestigungsmittel (18) zur Befestigung jedes der Endabschnitte (2) an der Karosserie hat, und bei der jedes der Befestigungsmittel (18) wenigstens ein Kopplungselement (19) hat, das in einer Längsrichtung und einer Querrichtung verläuft, wobei das Kopplungselement (19) erste und zweite gegenüberliegende Randabschnitte hat, die mit der Karosserie bzw. dem Endabschnitt (2) der Frontplatte (1) verbunden werden können, damit das Befestigungsmittel (18) eine begrenzte relative Bewegung der Karosserie und des Endabschnitts (2) in einer senkrechten Richtung (Z) zulassen kann, einer relativen Bewegung in der Längs- und der Querrichtung (X, Y) aber entgegenwirkt.

21. Stoßstangen-Baugruppe nach einem der Ansprüche 1 bis 20, bei der die Frontplatte (1) und die Versteifung (31) wenigstens ein zusammenwirkendes Paar aus einschnappendem Vorsprung und Öffnung (69, 71) haben.

22. Stoßstangen-Baugruppe nach einem der Ansprüche 1 bis 21, bei der die Frontplatte (1) mit der Versteifung (31) zusätzlich zu den Verbindungsmitteln (48, 49; 64, 68) durch Fixierungsmittel (72, 79, 82, 91) verbunden ist, die von der Außenseite der Frontplatte (1) zugänglich sind.

23. Stoßstangen-Baugruppe nach einem der Ansprüche 1 bis 22, bei der die Frontplatte (1) aus einem Plastmaterial, z. B. Polypropylen, hergestellt worden ist.

24. Stoßstangen-Baugruppe nach einem der Ansprüche 1 bis 23, bei der die Schenkel (38) im Verhältnis zur Mitte der Stoßstangen-Baugruppe symmetrisch angeordnet sind.

25. Stoßstangen-Baugruppe nach einem der Ansprüche 1 bis 24, bei der sich die Schenkel (38) jeweils an den Enden des Querelements (37) befinden.

26. Stoßstangen-Baugruppe nach Anspruch 25, bei dem die Schenkel (38) eine integrale Verlängerung des Querelements (37) darstellen.

27. Stoßstangen-Baugruppe nach einem der Ansprüche 25 oder 26, die wenigstens einen zusätzlichen Schenkel zwischen den genannten Schenkeln (38) einschließt.

28. Stoßstangen-Baugruppe nach einem der Ansprüche 1 bis 27, die wenigstens einen Abstandshalter (41) einschließt, der zwischen das Querelement (37) und einen oberen Abschnitt (36) der Frontplatte (1) eingefügt ist.

29. Stoßstangen-Baugruppe nach Anspruch 28, bei welcher der Abstandshalter (41) einen Stab (42), der längs des länglichen Querelements (37) verläuft, und Befestigungsmittel (43) zum Befestigen des Stabes (42) am Querelement (37) umfaßt.

30. Stoßstangen-Baugruppe nach Anspruch 29, bei der die Befestigungsmittel wenigstens eine Klemme (43) umfassen, die am Stab (42) angebracht wird und um das Querelement (37) zum Eingriff kommt.

31. Stoßstangen-Baugruppe nach einem der Ansprüche 28 bis 31, bei welcher der Abstandshalter (41) und das Querelement (37) ein zusammenwirkendes Paar aus Fixierstift und -loch (44, 46) haben.

## Revendications

1. Pare-chocs comprenant un renforcement transversal interne (31) destiné à être monté sur une extrémité de la carrosserie d'un véhicule, et un panneau extérieur (1) fixé sur l'extérieur du renforcement et le recouvrant (31), caractérisé en ce que le renforcement (31) n'occupe qu'une partie de la hauteur du panneau (1), de sorte que le panneau (1) comporte une extension ascendante (34) au-delà du renforcement (31), le pare-chocs englobant une structure de support (37, 38) comprenant un élément transversal allongé (37), agencé au-dessus du renforcement (31) et à l'intérieur de l'extension ascendante (34) du panneau (1), ainsi que des pieds espacés transversalement (38) servant au montage de l'élément transversal (37) sur le renforcement (31), et des moyens de connexion (48, 59; 64, 68) pour connecter l'extension ascendante (34) du panneau (1) à la structure de support (37, 38).

2. Pare-chocs selon la revendication 1, dans lequel le renforcement (31) a une section ayant généralement une forme en C.

3. Pare-chocs selon les revendications 1 ou 2, dans lequel le renforcement (31) est composé de tôle, de préférence de tôle d'acier.

4. Pare-chocs selon l'une quelconque des revendications 1 à 3, dans lequel l'élément transversal (37) a une section pratiquement constante.

5. Pare-chocs selon l'une quelconque des revendications 1 à 4, dans lequel l'élément transversal (37) a une section circulaire.

6. Pare-chocs selon l'une quelconque des revendications 1 à 5, dans lequel l'élément transversal (37) est creux.

7. Pare-chocs selon l'une quelconque des revendications 1 à 6, dans lequel l'élément transversal (37) est composé de métal, de préférence d'acier.

8. Pare-chocs selon l'une quelconque des revendications 1 à 7, dans lequel l'élément transversal (37) s'étend sur la majeure partie de la largeur transversale du renforcement (31).

9. Pare-chocs selon l'une quelconque des revendications 1 à 8, dans lequel l'élément transversal (37) supporte la partie supérieure (36) du panneau (1), de sorte à résister au mouvement descendant de ladite partie supérieure (36) au-delà de l'ensemble de ses extensions transversales co-extensives.

10. Pare-chocs selon l'une quelconque des revendications 1 à 9, dans lequel une partie supérieure (36) du panneau (1) est en contact direct avec l'élément transversal (37) sur au moins une partie de sa largeur transversale.

11. Pare-chocs selon l'une quelconque des revendications 1 à 10, dans lequel ledit moyen de connexion comprend au moins une paire coopérante de connecteurs composée d'une languette de verrouillage (49) et d'une structure de réception de la languette de verrouillage (59; 68).

12. Pare-chocs selon la revendication 11, dans lequel la structure de réception de la languette de verrouillage (59; 68) se trouve sur le panneau, la languette de verrouillage (49) se trouvant sur la structure de support (37, 38).

13. Pare-chocs selon la revendication 12, dans lequel la languette de verrouillage (49) est agencée sur une attache (48; 64) s'engageant dans la structure de support (37, 38).

14. Pare-chocs selon la revendication 13, dans lequel l'attache (48; 64) s'engage autour de l'élément transversal (37).

15. Pare-chocs selon la revendication 14, dans lequel l'attache (48; 64) est ouverte vers le haut.

16. Pare-chocs selon les revendications 14 ou 15, dans lequel l'attache (48; 64) et l'élément transversal (37) comportent au moins une paire coopérante composé d'une cheville et d'un trou d'ajustage (52, 53; 66, 67).

17. Pare-chocs selon la revendication 16, comportant deux paires de chevilles et de trous (52, 53; 66, 67) espacées angulairement autour de l'élément transversal (37).

18. Pare-chocs selon l'une quelconque des revendications 11 à 17, dans lequel la structure de réception de la languette de verrouillage (59; 68) comporte une ouverture de réception ayant une largeur supérieure à celle de la languette dans la direction transversale.

19. Pare-chocs selon l'une quelconque des revendications 11 à 18, dans lequel la languette (49) comporte des gradins (58) en vue de la butée contre la structure de réception de la languette de verrouillage (59).

20. Pare-chocs selon l'une quelconque des revendications 1 à 19, dans lequel le panneau (1) comporte des parties d'extrémité (2) destinées à s'étendre le long de la carrosserie du véhicule, et des moyens de montage (18) pour monter chacune desdites parties d'extrémité (2) sur la carrosserie, et dans lequel chaque moyen de montage (18) englobe au moins un élément de liaison (19), s'étendant vers l'avant et vers l'arrière ainsi que dans une direction transversale, l'élément de liaison (19) comportant des première et deuxième parties de bordure opposées pouvant respectivement être connectées à la carrosserie et à ladite partie d'extrémité (2) du panneau (1), pour permettre au moyen de montage (18) d'admettre un mouvement relatif limité de la carrosserie et de ladite partie d'extrémité (2) dans une direction verticale (Z) mais de résister à un mouvement relatif vers l'avant et vers l'arrière ainsi que dans les directions transversales (X, Y).

21. Pare-chocs selon l'une quelconque des revendications 1 à 20, dans lequel le panneau (1) et le renforcement (31) comportent au moins une paire coopérante composée d'une saillie à fixation par encliquetage et d'une ouverture (69, 71).

22. Pare-chocs selon l'une quelconque des revendications 1 à 21, dans lequel, en plus de sa fixation au moyen de connexion (48, 59; 64, 68), le panneau (1) est connecté au renforcement (31) par des moyens de fixation (72, 79, 82, 91) accessibles de l'extérieur du panneau (1);

23. Pare-chocs selon l'une quelconque des revendications 1 à 22, dans lequel le panneau (1) est composé de plastique, par exemple de polypropylène.

24. Pare-chocs selon l'une quelconque des revendications 1 à 23, dans lequel les pieds (38) sont agencés symétriquement par rapport au centre du pare-chocs.

25. Pare-chocs selon l'une quelconque des revendications 1 à 24, dans lequel les pieds (38) sont agencés au niveau de chaque extrémité de l'élément transversal (37).

26. Pare-chocs selon la revendication 25, dans lequel lesdits pieds (38) constituent une extension intégrante de l'élément transversal (37).

27. Pare-chocs selon les revendications 25 ou 26, englobant au moins un pied additionnel entre lesdits pieds (38).

28. Pare-chocs selon l'une quelconque des revendications 1 à 27, englobant au moins une entretoise (41) agencée entre l'élément transversal (37) et une partie supérieure (36) du panneau (1).

29. Pare-chocs selon la revendication 28, dans lequel l'entretoise (41) comprend une barre (42) s'étendant le long de l'élément transversal allongé (37) et un moyen de fixation (43) pour fixer la barre (42) à l'élément transversal (37).

30. Pare-chocs selon la revendication 29, dans lequel le moyen de fixation comprend au moins une attache (43) fixée à la barre (43) et s'engageant autour de l'élément transversal (37).

31. Pare-chocs selon l'une quelconque des revendications 28 à 30, dans lequel l'entretoise (41) et l'élément transversal (37) comportent une paire coopérante composée d'une cheville et d'un trou d'ajustage (44, 46).
